# EUROPÄISCHE PATENTSCHRIFT

(11) **EP 1 735 211 B1**
(45) Veröffentlichungstag und Bekanntmachung des Hinweises auf die Patenterteilung: **09.09.2009**
(21) Anmeldenummer: 05733257.9
(22) Anmeldetag: 18.04.2005
(51) Int. Cl.: B64C 3/18, B64C 1/00, B64C 3/00, B64C 3/28

(54) **VERKLEIDUNG FÜR EINE STRUKTUR EINES FLUGZEUGS**
FAIRING FOR AN AIRCRAFT STRUCTURE
REVETEMENT POUR STRUCTURE D'AVION

(30) Priorität: 16.04.2004 DE 102004018579
(43) Veröffentlichungstag der Anmeldung: 27.12.2006
(73) Patentinhaber: Airbus Deutschland GmbH, 21129 Hamburg (DE)
(72) Erfinder: MÄNZ, Christian, 22359 Hamburg (DE)
(74) Vertreter: Haeusler, Rüdiger Hans-Jörg
(86) Internationale Anmeldenummer: PCT/EP2005/004097
(87) Internationale Veröffentlichungsnummer: WO 2005/100152

(56) Entgegenhaltungen:
- EP-A- 0 995 673
- EP-A- 1 127 785
- EP-A- 1 176 089
- WO-A-02/098733
- WO-A-03/000546
- DE-A1- 10 005 348
- US-A- 1 939 599
- US-A- 2 390 761
- US-A- 2 567 124

## Beschreibung

Die vorliegende Erfindung betrifft eine Verkleidung für eine Struktur eines Flugzeugs, insbesondere zur Ausbildung von Nasenteilen von Seiten- und Höhenleitwerk sowie Flügeln. Insbesondere betrifft die vorliegende Erfindung eine Verkleidung für eine Struktur eines Flugzeugs sowie ein Flugzeug mit einer entsprechenden Verkleidung.

Bei Flugzeugen sind die Nasenteile der Verkleidung von Seiten- und Höhenleitwerk sowie Flügeln durch Einschlag von Gegenständen, wie beispielsweise Vögeln, gefährdet. Diese Verkleidungen müssen auf jeden Fall sicherstellen, dass die tragende Struktur des Flugzeugs, die unter dieser Verkleidung liegt, vollständig gegen Beschädigung durch beispielsweise solch einen Vogelschlag geschützt wird. Dies wird heutzutage durch CFK Sandwich-Konstruktionen oder Aluminiumkonstruktionen realisiert. Entsprechende Metallkonstruktionen bestehen üblicherweise aus einem in Strakform gezogenen Blech, welches durch Rippen ausgesteift wird.

DE 100 05 348 A1 beschreibt ein Verfahren zur Fertigung von Nasenstrukturen für aerodynamische Flächen. Mittels dem dort beschriebenen Verfahren können Außenhautstrukturen hergestellt werden, welche durch eine Innenrippe und einem Hutlängsprofil verstärkt werden können. Eine Möglichkeit, eine Rissbildung der Außenhaut mittels gezielt verformbarer Tragstrukturen zu verhindern, wird nicht beschrieben.

EP 1127785 A2 beschreibt ein Strukturbauteil für ein Flugzeug und ein Herstellungsverfahren eines solchen Strukturbauteils. Auf einem Hautfeld werden Versteifungselemente angebracht, welche in Längsrichtung als Stringer und in Querrichtung als Aussteifelemente bezeichnet werden. Somit kann eine Außenhaut eines Flugzeugs verstärkt werden. WO 02/098733 A1 beschreibt eine Versteifungsvorrichtung zum Versteifen einer Flugzeughaut. Die Versteifungsvorrichtung kann sich an eine Außenhaut anschmiegen, um diese zu versteifen.

In nachteiliger Art und Weise muss eine große Anzahl von Rippen vorgesehen werden und ein relativ dickes Blech, um beispielsweise eine Rissbildung in dem Blech, das beispielsweise die Haut des Flugzeugs bildet, zu vermeiden. Folglich weisen solche Metallkonstruktionen ein hohes Gewicht auf.

Die bekannte CFK-Konstruktion erfordert einen aufwendigen Erosionsschutzlack bzw. einen entsprechenden aufwendigen Erosionsschutz.

Es ist eine Aufgabe der vorliegenden Erfindung, eine leichte kostengünstige Verkleidung für eine Struktur eines Flugzeugs anzugeben.

Gemäß der vorliegenden Erfindung, wie in Anspruch 1 angegeben, wird eine Verkleidung für eine Struktur eines Flugzeugs angegeben, die insbesondere für Nasenteile von Seitenleitwerk, Höhenleitwerk oder Flügel des Flugzeugs verwendet werden kann. Die Verkleidung umfasst eine Haut und eine Tragestruktur. Die Haut ist auf der Tragestruktur angeordnet. Die Tragestruktur umfasst eine Vielzahl von Rippen sowie eine Vielzahl von Stringern. Die Vielzahl von Stringern sind auf der Vielzahl von Rippen zur Unterstützung der Haut angeordnet.

Die vorliegende Erfindung ermöglicht eine Verteilung der Einschlagenergie, beispielsweise durch Vogelschlag, auf einen vergrößerten Bereich. In anderen Worten leiten die unter der Haut angeordneten Stringer die Einschlagenergie auf einen vergrößerten Bereich ab, wodurch die durch den Vogelschlag eingebrachte Energie durch plastische Verformung der Haut, der Stringer und der Rippen auf eine große Fläche verteilt wird. Große Fläche in diesem Zusammenhang bedeutet, dass die Fläche, die durch den eingeschlagenen Gegenstand verformt wird, größer vorzugsweise sogar wesentlich größer ist als das Ausmaß des eingeschlagenen Gegenstandes.

Im Gegensatz zu dem oben diskutierten Stand der Technik wird also die beispielsweise durch Vogelschlag eingebrachte Energie auf einen großen Bereich der Verkleidung durch die Stringer verteilt, wodurch beispielsweise eine dünnere Haut und eine signifikant verringerte Anzahl von Rippen vorgesehen werden kann, womit das Gewicht der Verkleidung verringert werden kann.

Gemäß der vorliegenden Erfindung weisen die Vielzahl von Stringern jeweils einen Stringerfuß auf, der zum Kontakt mit der Haut ausgebildet ist. Der Stringerfuß weist Aussparungen auf. Diese Aussparungen können beispielsweise zur weiteren Gewichtsverringerung gleichmäßig über die gesamten Stringer verteilt werden, aber auch gehäuft in Bereichen, wo eine geringere Stabilität des Stringers erforderlich ist. Auf diese Art und Weise kann beispielsweise eine weitere Gewichtsverringerung erzielt werden.

Die Aussparungen, die beispielsweise als Ausschnitte oder Cut-outs ausgestaltet sind, weisen jeweils zur Haut hin eine Öffnung auf. Diese Aussparungen dienen als Dehnungsausgleichungsbereiche bei einer Deformation, die durch einen Einschlag eines Gegenstandes auf der Haut bewirkt wird. Auf diese Art und Weise können Kompressionskräfte bzw. Dehnungskräfte, die bei solch einem Einschlag auftreten, gesteuert werden.

Gemäß einem weiteren Ausführungsbeispiel der vorliegenden Erfindung, wie in Anspruch 2 angegeben, bildet die Haut eine Rundung um die Struktur des Flugzeugs aus. Die Form der Vielzahl von Rippen ist zumindest an einem Querschnitt der Rundung angebracht und die Vielzahl von Stringern verlaufen im Wesentlichen parallel zueinander auf der Vielzahl von Rippen. Durch die parallele Anordnung der Stringer mit einem definierten Abstand kann erzielt werden, dass sich bei einer definierten Größe des einschlagenden Objekts eine definierte Anzahl der Stringer auf großer Länge plastisch verformen und dabei den größten Teil der eingebrachten Energie aufnehmen. Lediglich ein geringer Teil der eingebrachten Energie wird durch die plastische Verformung des Blechs aufgenommen, was im Gegensatz zu dem oben diskutierten Stand der Technik ist, wo die Flugzeughaut durch Verformung den wesentlichen Teil der eingebrachten Energie aufnimmt.

Gemäß einem weiteren Ausführungsbeispiel der vorliegenden Erfindung nach Anspruch 3 sind die Haut, die Vielzahl von Stringern und die Vielzahl von Rippen derart ausgestaltet, dass die Einschlagsenergie auf einen Bereich umgeleitet wird, der wesentlich größer ist als das Ausmaß des einschlagenden Gegenstandes. Diese Ausgestaltung betrifft im Wesentlichen eine Dicke und ein Material der Haut, eine Dimensionierung und einen Abstand der Stringer sowie eine Dimensionierung der Rippen. Insbesondere betrifft dies auch einen Abstand der angeordneten Rippen, der, im Vergleich zum oben diskutierten Stand der Technik, wesentlich vergrößert werden kann. Beispielsweise kann bei verschiedenen Strukturen ein Abstand zwischen den Rippen verdoppelt, verdreifacht oder sogar auch vervierfacht werden, wodurch sich insgesamt das Gewicht der Verkleidung verringern kann.

Gemäß einem weiteren Ausführungsbeispiel der vorliegenden Erfindung, wie in Anspruch 4 angegeben, bildet die Haut ein Nasenteil von Seitenleitwerk, Höhenleitwerk oder Flügeln des Flugzeugs aus. Das Nasenteil weist dann eine Kante auf, beispielsweise die Leitwerks- oder Flügelkante, die sich im Wesentlichen entlang einer Richtung erstreckt. Die Vielzahl von Rippen sind im Wesentlichen rechtwinklig zu dieser Richtung angeordnet und die Vielzahl von Stringern sind im Wesentlichen parallel zu der Richtung angeordnet. Durch beispielsweise die parallele Anordnung der Vielzahl von Stringern parallel zu der Leitwerks- bzw. Flügelkante kann gerade die Verformung bei einem Einschlag eines Gegenstandes derart auf Bereiche abgeleitet werden, die entlang dieser Richtung angeordnet sind. In anderen Worten wird eine Weiterleitung der Einschlagenergie bzw. der Verformung entlang der Leitwerks- bzw. Flügelkante erzielt, wobei eine Verformung in das Leitwerk bzw. den Flügel hinein, d. h. rechtwinklig zu der Richtung relativ gering gehalten werden kann, wodurch ein guter Schutz der Struktur des Flugzeugs erzielt werden kann.

Gemäß einem weiteren vorteilhaften Ausführungsbeispiel der vorliegenden Erfindung, wie in Anspruch 5 angegeben, sind die Vielzahl von Stringern mit der Haut verbunden.

Beispielsweise kann die Stringermontage mittels eines Laserschweißverfahrens ausgeführt werden.

Gemäß einem weiteren vorteilhaften Ausführungsbeispiel der vorliegenden Erfindung, wie in Anspruch 6 angegeben, ist die Haut an Berührungsbereichen, wo die Vielzahl von Stringern die Haut berühren bzw. mit der Haut verbunden sind, verdickt. Dies ermöglicht in vorteilhafter Art und Weise eine noch dünnere Ausgestaltung der Haut des Flugzeugs, da bestimmte Mindestdicken der Haut, die beispielsweise für ein Schweißen der Stringer an die Haut erforderlich sind, lediglich in der unmittelbaren Umgebung der Schweißbereiche erforderlich sind und sich nicht über den gesamten Bereich der Haut erstrecken müssen.

Gemäß einem weiteren Ausführungsbeispiel der vorliegenden Erfindung, wie in Anspruch 7 angegeben, weisen die Vielzahl von Stringern jeweils einen T-, L-, Z-, U- oder J-förmigen Querschnitt auf, was eine einfache und strukturell stabile Ausgestaltung der Stringer ermöglicht.

Gemäß einem weiteren Ausführungsbeispiel der vorliegenden Erfindung, wie in Anspruch 8 angegeben, ist die Tragestruktur und die Haut derart ausgestaltet, dass beim Einschlag eines kugelförmigen Körpers auf der Haut eine Verformung der Haut erzeugt wird, die keinen rotationssymmetrischen Querschnitt aufweist. Dies bedeutet beispielsweise, dass eine Richtung der größten Verformung der Haut durch die Richtung und Ausgestaltung der Stringer unter der Haut in vorteilhafter Art und Weise eingestellt werden kann und auf diese Art und Weise beispielsweise eine Verformung so ausgestaltet werden kann, dass Bereiche, wo eine Tragestruktur dicht unter der Oberfläche der Haut angeordnet ist, lediglich eine geringe Verformung aufweisen und die wesentliche Verformungsenergie auf andere Bereiche abgeleitet wird.

Gemäß einem weiteren vorteilhaften Ausführungsbeispiel der vorliegenden Erfindung ist die Haut aus Blech, beispielsweise aus einem Aluminiumblech.

Anspruch 10 der vorliegenden Erfindung betrifft ein Flugzeug mit einer Verkleidung, wie sie in den Ansprüchen 1 bis 9 beschrieben ist.

Im Folgenden werden Ausführungsbeispiele der vorliegenden Erfindung mit Verweis auf die folgenden Figuren detaillierter beschrieben.
Fig. 1 zeigt eine dreidimensionale Skizze einer Verkleidung gemäß einem ersten Ausführungsbeispiel der vorliegenden Erfindung.
Fig. 2a bis 2c zeigen eine Verformung aufgrund eines Einschlages eines kugelförmigen Körpers auf der Verkleidung von Fig. 1.
Fig. 3 zeigt eine dreidimensionale Ansicht eines weiteren vorteilhaften Ausführungsbeispiels der vorliegenden Erfindung.
Fig. 4 zeigt einen Querschnitt eines Stringers und dessen Anbringung an der Haut gemäß einem vorteilhaften Ausführungsbeispiel der vorliegenden Erfindung.
Fig. 5 zeigt eine Seitenansicht eines Stringers gemäß eines weiteren vorteilhaften Ausführungsbeispiels der vorliegenden Erfindung.
Fig. 6 zeigt den Stringer von Fig. 5 in verformtem Zustand.
Fig. 7 zeigt ein Flugzeug mit einem Ausführungsbeispiel der Verkleidung gemäß der vorliegenden Erfindung.

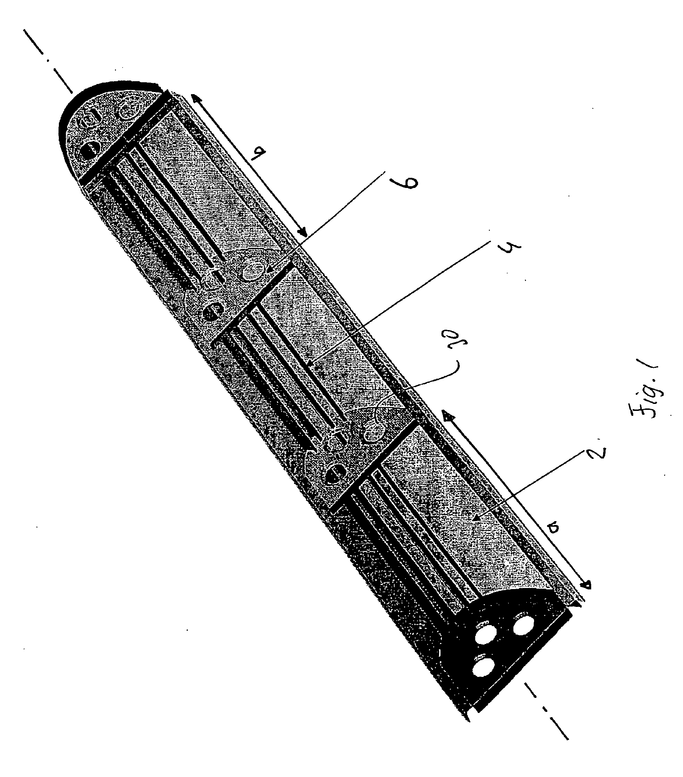

In der folgenden Beschreibung der Fig. 1 bis 7 werden die gleichen Bezugsziffern für gleiche oder sich entsprechende Elemente verwendet.

Fig. 1 zeigt eine dreidimensionale Ansicht einer Verkleidung gemäß eines vorteilhaften Ausführungsbeispiels der vorliegenden Erfindung. Die in Fig. 1 dargestellte Verkleidung kann beispielsweise ein Nasenteil eines Seitenleitwerks, eines Höhenleitwerks oder eines Flügels des Flugzeugs sein. Wie Fig. 1 zu entnehmen ist, ist eine Haut 2 derart gebogen, dass sie einen gewissen Radius bildet, der beispielsweise das Nasenteil eines Leitwerks bzw. Flügels des Flugzeugs oder die Leitwerks- bzw. Flügelkante ausbildet. Das Nasenteil erstreckt sich im Wesentlichen entlang einer Richtung, die hier mittels der strichpunktierten Linie angegeben ist. Unter der Haut im Wesentlichen im Bereich der Leitwerks- bzw. Flügelkante oder dem Nasenrücken des Nasenteils sind im Wesentlichen parallel zu der Streckungsrichtung der Verkleidung eine Vielzahl von Stringern 4 angeordnet. Um eine Verformung der Haut durch Luftlasten zu vermeiden, sind in großen Abständen kleine Rippen 6 angeordnet. Die Rippen können beispielsweise mit Löchern 30 zur Gewichtsersparnis versehen sein. Auch ist es beispielsweise möglich, sichel- oder bumerangförmige Rippen 6 zu verwenden. Die Rippen können in äquidistanten Abständen a oder b angeordnet sein. Es ist jedoch auch möglich, wie in Fig. 1 dargestellt, die Abstände zwischen den Rippen zu variieren, beispielsweise derart, dass zwei Rippen mit einem Abstand a angeordnet sind und zwei weitere Rippen einen Abstand b aufweisen. Die Abstände der Rippen können entsprechend den auftretenden Lasten variiert werden.

Im Gegensatz zum oben diskutierten Stand der Technik, wo beispielsweise bei einem Vogelschlag die eingebrachte Energie nicht ausreichend verteilt wird bzw. im Wesentlichen in eine Verformung der Haut umgewandelt wird und deshalb eine große Materialstärke der Haut bzw. der angeordneten Rippen erforderlich ist, wird gemäß dieses Ausführungsbeispiels durch plastische Verformung der Stringer auf großer Länge aufgenommen, wodurch die Stringer den größten Teil der eingebrachten Energie aufnehmen. Lediglich ein geringer Teil der eingebrachten Energie wird durch plastische Verformung der Haut bzw. des Blechs der Haut aufgenommen. Der genaue Verlauf der Verformung kann durch die Frequenz der Rippen, durch die Dimensionierung und Anordnung der Stringer sowie durch Material und Dicke bzw. Ausgestaltung der Haut variabel angepasst werden. Durch Simulationen kann damit der Aufbau der Verkleidung derart angepasst werden, dass gewünschte Verformungen erzielt werden.

Die Stringer 4 können beispielsweise mittels eines Laserschweißverfahrens auf der Haut 2 angebracht sein, wodurch ein einfaches kostengünstiges Fertigungsverfahren angegeben werden kann.

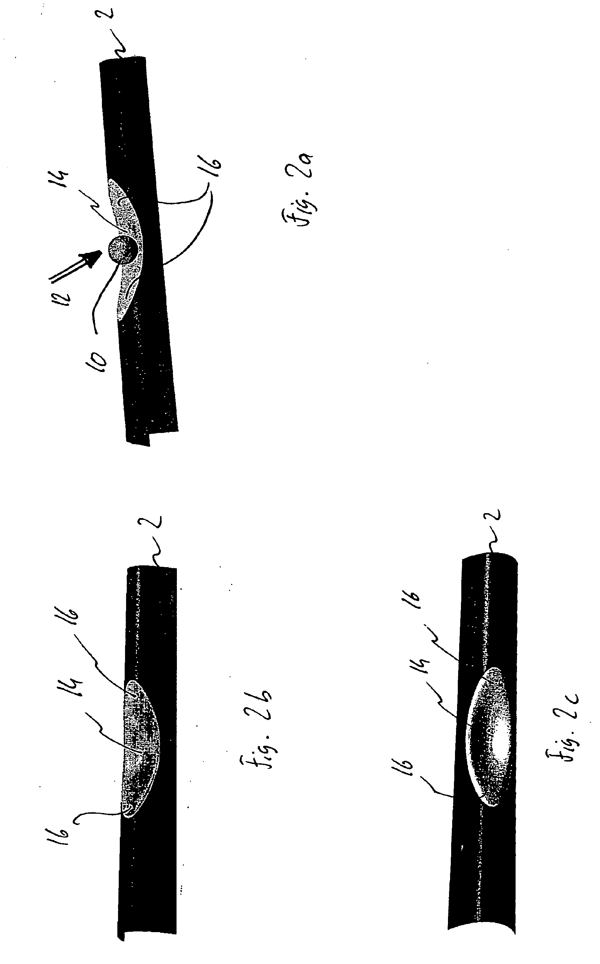

In den folgenden Fig. 2a bis 2c wird die Wirkung eines Einschlags eines kugelförmigen Körpers auf die Nase der Verkleidung gemäß des in Fig. 1 dargestellten Ausführungsbeispiels gezeigt. Wie Fig. 2a zu entnehmen ist, ist ein Einschlag eines kugelförmigen Körpers 10 auf der Haut 2 der Verkleidung dargestellt. Insbesondere ist Fig. 2a zu entnehmen, dass, obwohl ein kugelförmiger Körper 10 auf der Nase eingeschlagen ist, keine rotationssymmetrische Verformung der Haut und der darunter liegenden Tragestruktur bewirkt wird. Die Einschlagrichtung des Körpers 10 ist mit Pfeil 12 in Fig. 2a angegeben.

Die Verformung ist im Bereich 14 in der unmittelbaren Umgebung des eingeschlagenen Körpers 10 am größten. Wie jedoch Fig. 2a zu entnehmen ist, wird die Verformung entlang den unter der Haut 2 angeordneten Stringern 4 großflächig auf die Bereiche 16, die sich im Wesentlichen entlang der Nasenrichtung erstrecken, verteilt.

Dies kann auch den Fig. 2b und 2c entnommen werden, die jeweils eine Seitenansicht bzw. eine unmittelbare Draufsicht auf die Verformung zeigen. Wie den Fig. 2a bis 2c zu entnehmen ist, wird im Wesentlichen eine linsenförmige Verformung erzielt bzw. eine Verformung, die einem gestauchten Kreis entspricht. Die Verformung erstreckt sich entlang der Streckungsrichtung der Nase wesentlich weiter als in einer Richtung rechtwinklig dazu. In anderen Worten wenn die Verkleidung eine Leitwerks- bzw. Flügelkante darstellt, erstreckt sich die Verformung im Wesentlichen entlang der Kante des Leitwerks bzw. Flügels und nicht in das Leitwerk bzw. den Flügel hinein.

Folglich wird die eingebrachte kinetische Energie, die durch die Massengeschwindigkeit des eingeschlagenen Körpers vorgegeben ist, in Umformarbeit des beteiligten Materials umgewandelt. Da gemäß der vorliegenden Erfindung die angrenzenden Bereiche 16 mit in die Verformung einbezogen werden, verteilt sich das für die Energieumwandlung erforderliche Metallvolumen auf eine größere Fläche, so dass beispielsweise für die Haut 2 eine geringere Wandstärke verwendet werden kann. Durch die Geometrie der Nasenteile stehen dafür in vorteilhafter Art und Weise beispielsweise bei einem Seitenleitwerk die Bereiche ober- und unterhalb des Aufschlagpunktes zur Verfügung.

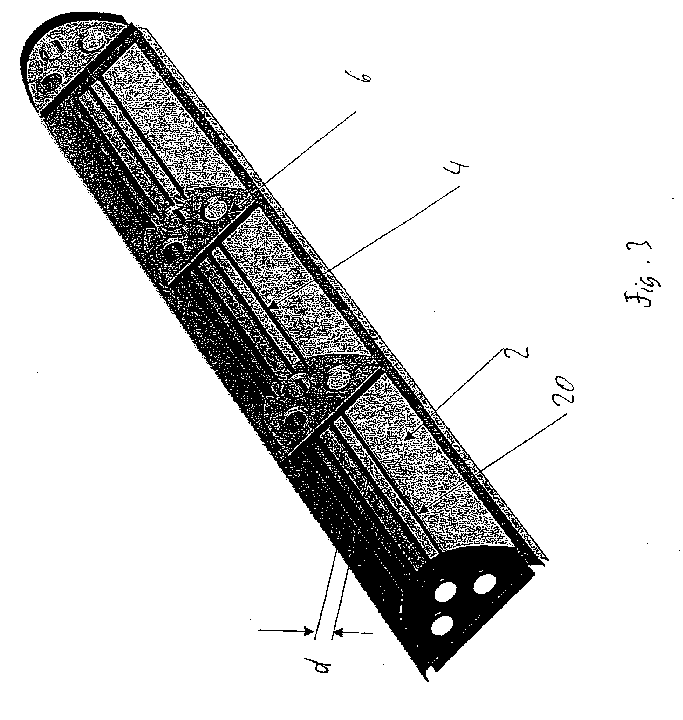

Fig. 3 zeigt eine weitere dreidimensionale Darstellung eines weiteren vorteilhaften Ausführungsbeispiels der Verkleidung gemäß der vorliegenden Erfindung. Wie Fig. 3 zu entnehmen ist, kann eine Verformungstiefe und auch eine Größe der Verformung in die angrenzenden Bereiche 16 mittels der Dimensionierung der Stringer sowie durch Einstellung eines Abstandes d zwischen den Stringern ausgestaltet werden. Es ist möglich, die Stringer mit äquidistanten Abständen anzuordnen. Jedoch kann die Frequenz der Stringer auch in Bereichen, wo eine geringere Verformungstiefe erforderlich ist, mit einer größeren Frequenz angeordnet werden. Die Stringer 4 sind in Fig. 3 im Wesentlichen parallel zueinander in der Erstreckungsrichtung des Nasenteils angeordnet.

Im Wesentlichen entspricht der Aufbau der in Fig. 3 dargestellten Verkleidung der Verkleidung, die in Fig. 1 dargestellt ist. Jedoch sind die Stringer 4 jeweils auf Verdickungen 20 der Haut 2 angeordnet. In vorteilhafter Art und Weise sind die Stringer 4 an Berührungspunkten mit den Verdickungen 20 mit der Haut 2 verschweißt. Dies kann in vorteilhafter Art und Weise mittels eines Laserschweißverfahrens ausgeführt werden.

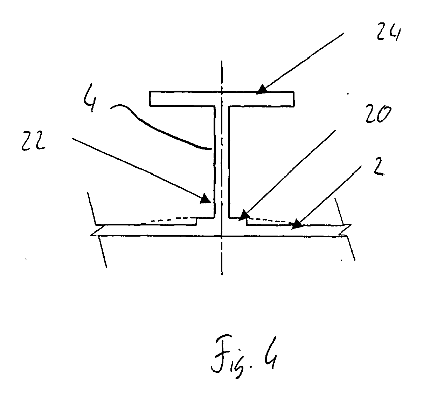

Fig. 4 zeigt eine Schnittansicht eines Stringers 4, der Haut 2 und der Verdickung 20 von Fig. 3.

Wie Fig. 4 zu entnehmen ist, weist der Stringer 4 im Wesentlichen eine T-, L-, Z-, U- oder J-förmige Form auf, wobei ein Stringerfuß 22 mit einer Aufdickung 20 in der Haut 2 verbunden ist. Bei der Aufdickung 20 in der Haut 2, die beispielsweise in Aluminiumblech sein kann, kann es sich, wie in Fig. 4 dargestellt, lediglich um eine rechteckförmige Aufdickung in den Bereichen des Stringerfußes 20 handeln. Es ist jedoch auch möglich, kontinuierliche Übergänge zwischen Verdickung und Normalbereichen des Bleches zu erzielen, wie beispielsweise mittels der gestrichelten Linie in Fig. 4 dargestellt.

Wie Fig. 4 zu entnehmen ist, kann der Stringer 4 ebenfalls mit einer Verstärkung 24 im Kopfbereich des Stringers 4 versehen werden, wodurch die T-, L-, Z-, U- oder J-förmige Querschnittsstruktur erzielt werden kann. Dies ermöglicht eine einfache Herstellung des Stringers bei einem geringen Gewicht und einer großen Stabilität.

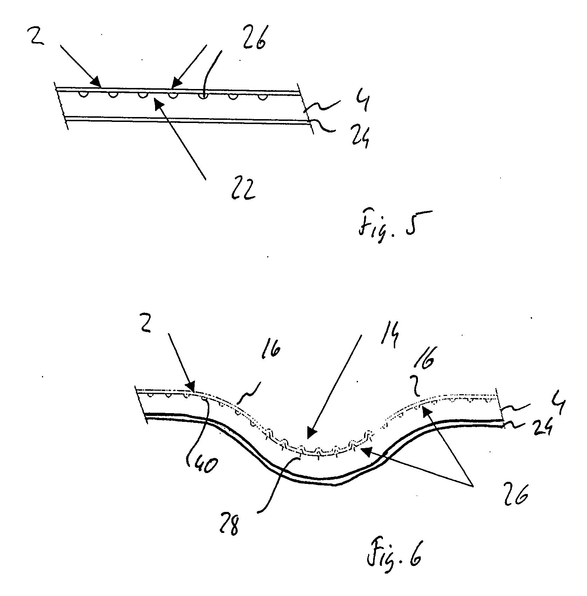

Fig. 5 zeigt eine Seitenansicht eines Ausführungsbeispiels eines Stringers gemäß der vorliegenden Erfindung. Wie Fig. 5 zu entnehmen ist, weist der Stringerfuß 22 Unterbrechungen, Aussparungen oder Cut-outs auf, die sich, wie in Fig. 5 gezeigt, zur Haut hin öffnen können. Diese Aussparungen sind in Fig. 5 mit der Bezugsziffer 26 bezeichnet. Diese Aussparungen 26 können mit beliebiger konstanter oder sich verändernder Frequenz entlang des Stringerfußes 22 vorgesehen sein.

Fig. 6 zeigt den Effekt dieser Aussparungen 26 bei einer Verformung des Stringers. Wie Fig. 6 zu entnehmen ist, sind Aussparungen 28 in Bereichen, in denen die Oberfläche des Stringers 4 gestaucht wird, geschlossen, wobei Aussparungen 40 in Bereichen, wo eine Dehnung der Oberfläche des Stringerfußes bewirkt wird, aufgeweitet sind. In anderen Worten wirken die Aussparungen als Dehnungsausgleichsbereiche bei einer Deformation durch den Einschlag eines Gegenstandes auf der Haut derart, dass Stauchungen oder Dehnungen mittels den Aussparungen 26 ausgeglichen werden können. Auch ist es möglich, durch Ausgestaltung der Aussparungen 26 die bei einem Einschlag auftretenden Kräfte derart zu steuern, dass eine Verformung gesteuert werden kann. Vorteilhaft können die Aussparungen 26 auch dazu dienen, beispielsweise Risse in Dehnungsbereichen zu vermeiden.

Gemäß der vorliegenden Erfindung wird also eine Verkleidung, beispielsweise für Nasenteile der Verkleidungen, von Seiten- und Höhenleitwerk sowie Flügeln eines Flugzeugs angegeben, in der Stringer vorgesehen sind, die sich im Falle eines Einschlags eines Gegenstandes auf großer Länge plastisch verformen und einen großen Teil der eingebrachten Energie aufnehmen. Auf diese Art und Weise wird ermöglicht, dass lediglich ein geringer Teil der eingebrachten plastischen Energie durch die plastische Verformung der Haut des Flugzeugs aufgenommen wird. Durch die vorstehend beschriebenen Maßnahmen kann der genaue Verlauf der Verformung eingestellt werden. Dies kann beispielsweise mittels Crashsimulationen ermittelt werden. Um eine Verformung durch Luftlasten zu vermeiden, können in entsprechenden Abständen kleine sichelförmige Rippen vorgesehen werden. Insbesondere kann die vorliegende Erfindung eine Gewichtsersparnis und eine Kosteneinsparung ermöglichen. Darüber hinaus kann ein verbessertes Verformungsverhalten bei beispielsweise einem Vogelschlag ermöglicht werden.

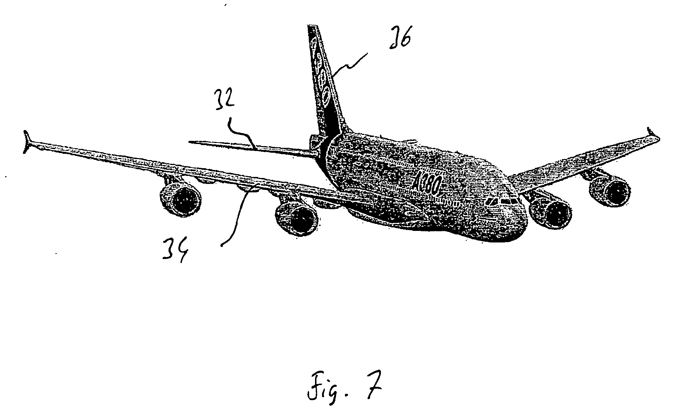

Fig. 7 zeigt eine Darstellung eines Flugzeugs mit einer Verkleidung gemäß einem Ausführungsbeispiel der vorliegenden Erfindung. Das Flugzeug in Fig. 7 weist ein Seitenleitwerk 36 sowie ein Höhenleitwerk 32 mit der Verkleidung gemäß der vorliegenden Erfindung auf. Ebenfalls können die Flügelnasen 34 gemäß der Verkleidung der vorliegenden Erfindung ausgestaltet sein.

## Patentansprüche

1. Verkleidung für eine Struktur eines Flugzeugs, insbesondere für Nasenteile von Seitenleitwerk, Höhenleitwerk oder Flügel des Flugzeugs, wobei die Verkleidung umfasst:
eine Haut (2);
eine Tragestruktur (4, 6);
wobei die Haut (2) auf der Tragestruktur (4, 6) angeordnet ist;
wobei die Tragestruktur eine Vielzahl von Rippen (6) aufweist und eine Vielzahl von Stringern (4);
**dadurch gekennzeichnet, dass** die Vielzahl von Stringern (4) jeweils einen Stringerfuß (22) aufweisen der zum Kontakt mit der Haut (2) ausgebildet ist; und der Stringerfuß (22) jeweils Aussparungen (26) aufweist, wobei die Aussparungen (26) jeweils zur Haut (2) hinweisen; und wobei die Aussparungen als Dehnungsausgleichsbereiche und definierte Stauchungsbereiche bei einer Deformation durch einen Einschlag eines Gegenstandes auf der Haut ausgestaltet sind, wobei die Vielzahl von Stringern (4) derart auf der Vielzahl von Rippen (6) zur Unterstützung der Haut angeordnet und ausgebildet sind, dass die Stringer (4) im Falle eines Einschlags eines Gegenstands auf der Haut (2) plastisch verformbar sind und dabei den größten Teil der durch den Einschlag des Gegenstands eingebrachten Energie aufnehmen.

2. Verkleidung nach Anspruch 1,
wobei die Haut eine Rundung um die Struktur des Flugzeugs ausbildet;
wobei eine Form der Vielzahl von Rippen (6) zumindest an einen Querschnitt der Rundung angepasst ist; und
wobei die Vielzahl von Stringern (4) im Wesentlichen parallel auf der Vielzahl von Rippen (6) angeordnet sind.

3. Verkleidung nach Anspruch 1 oder 2,
wobei eine Dicke und ein Material der Haut (2), eine Dimensionierung und ein Abstand der Vielzahl von Stringern (4) und eine Dimensionierung und ein Abstand der Vielzahl von Rippen (6) derart eingerichtet sind, dass eine Einschlagenergie eines Gegenstandes (10) mit einem ersten Ausmaß auf einen ersten Bereich (14) der Haut (2) umleitbar ist, der größer ist als das erste Ausmaß des Gegenstands (10),
wobei die Haut (2), die Vielzahl von Stringern (4) oder die Vielzahl von Rippen (6) derart eingerichtet sind, dass die durch den Einschlag eingebrachte Einschlagenergie in Umformarbeit der Haut (2), der Vielzahl von Stringern (4) oder der Vielzahl von Rippen (6) umwandelbar ist,
wobei ein angrenzender Bereich (16) mit einem zweiten Ausmaß der Haut (2) derart eingerichtet ist, dass die durch den Einschlag auf den ersten Bereich (14) der Haut (2) eingebrachte Einschlagenergie zur Energieumwandlung mit verteilbar ist,
wobei der angrenzender Bereich (16) größer als der durch den Einschlag betroffenen ersten Bereich (14) der Haut (2) ist.

4. Verkleidung nach einem der Ansprüche 1 bis 3,
wobei die Verkleidung ein Nasenteil von Seitenleitwerk, Höhenleitwerk oder Flügel des Flugzeugs ausbildet;
wobei das Nasenteil eine Kante aufweist, die sich im Wesentlichen entlang einer Richtung erstreckt;
wobei die Vielzahl von Rippen (6) im Wesentlichen Rechtwinklig zu dieser Richtung angeordnet sind; und
wobei die Vielzahl von Stringern (4) im Wesentlichen parallel zu dieser Richtung angeordnet sind.

5. Verkleidung nach einem der Ansprüche 1 bis 4,
wobei die Vielzahl von Stringern (4) mit der Haut (2) verbunden sind.

6. Verkleidung nach Anspruch 5,
wobei die Haut (2) an Berührungsbereichen mit der Vielzahl von Stringern (4) Aufdickungen (20) aufweist.

7. Verkleidung nach einem der Ansprüche 1 bis 6,
wobei die Vielzahl von Stringern (4) jeweils einen T-, L-, Z-, U- oder J-förmigen Querschnitt aufweisen.

8. Verkleidung nach einem der Ansprüche 1 bis 7,
wobei die Tragstruktur (4, 6) und die Haut (2) derart eingerichtet sind, dass infolge eines Einschlages auf der Haut (2) mit einem kugelförmigen Körper (10) durch ein Zusammenwirken der Tragstruktur (4, 6) und der Haut (2) eine Verformung der Haut (2) mit einem nicht rotationssymmetrischen Querschnitt bereitstellbar ist.

9. Verkleidung nach einem der Ansprüche 1 bis 8,
wobei die Haut aus Blech ist.

10. Flugzeug mit einer Verkleidung nach einer der Ansprüche 1 bis 9.

## Claims

1. A cover for an aircraft structure, in particular for nose parts of the vertical tail, horizontal tail or the wing of aircraft, wherein the cover comprises:
a skin (2);
a support structure (4, 6);
wherein the skin (2) is arranged on the support structure (4, 6);
wherein the support structure includes a plurality of ribs (6) and a plurality of stringers (4);
**characterized in that**
each of the plurality of stringers (4) comprises a stringer base (22) that is adapted for contacting the skin (2), wherein each of the stringer bases (22) has recesses (26);
wherein the recesses (26) point towards the skin (2); and
wherein the recesses are adapted as expansion compensation region and defined buckling region in the case of deformation that is caused by the object impacting the skin,
wherein the plurality of stringers (4) are arranged on the plurality of ribs (6) to support the skin, such that the stringers (4) are plastically deformable in case of an impact of an object onto the skin (2) and thereby receiving the most of the impact energy of the impacted object.

2. The cover of claim 1,
wherein the skin forms a curvature around the structure of the aircraft;
wherein the form of the plurality of ribs (6) is adapted to at least to a cross section of the curvature; and
wherein the plurality of stringers (4) essentially extend parallel to each other on the plurality of ribs (6).

3. The cover of claim 1 or 2,
wherein a thickness and a material of the skin (2), dimensions and a distance of the plurality of stringers (4) and dimensions and a distance of the plurality of ribs (6) are adapted such that, an impact energy of an object (10) having first dimensions is deviated onto a first region of the skin (2), the energy introduced by the impact is larger than the first dimensions;
wherein the energy introduced by the impact is converted to forming-work of the skin (2), of the plurality of stringers (4), or of the plurality of ribs (6);
wherein an adjacent region of the skin having second dimensions is adapted to distribute the impact energy impacted onto the first region (14) for energy transformation;
wherein the adjacent region is larger than the first region (14) of the skin (2), hit by the impact.

4. The cover of any one of claims 1 to 3,
wherein the cover forms a nose part of the vertical tail, horizontal tail or of wings of the aircraft;
wherein the nose part has an edge that extends essentially along one direction;
wherein the plurality of ribs (6) are arranged essentially perpendicularly to this direction; and
wherein the plurality of stringers (4) are arranged essentially parallel to this direction.

5. The cover of any one of claims 1 to 4,
wherein the plurality of stringers (4) are connected to the skin (2).

6. The cover of claim 5,
wherein in contact regions where the plurality of stringers (4) touch the skin (2), the skin comprises thickened parts or regions (20).

7. The cover of any one of claims 1 to 6,
wherein the plurality of stringers (4) have at least one of a T-, L-, Z-, U- and J-shaped cross section.

8. The cover of any one of claims 1 to 7,
wherein the support structure (4, 6) and the skin (2) are adapted for cooperation such that when a spherical body (10) impacts the skin (2), the deformation of the skin (2) caused by the impact of the spherical body does not have a rotationally symmetrical cross section.

9. The cover of any one of claims 1 to 8,
wherein the skin is made of sheet metal.

10. An aircraft with a cover of any one of claims 1 to 9.

## Revendications

1. Carénage pour une structure d'un avion, en particulier pour des parties de bec d'empennage vertical, d'empennage horizontal ou de voilure de l'avion, le carénage comprenant :
- une peau (2) ;
- une structure portante (4, 6) ;
- la peau (2) étant disposée sur la structure portante (4, 6) ;
- la structure portante présentant une multiplicité de nervures (6) et une multiplicité de raidisseurs(4) ;
**caractérisé en ce que** chaque raidisseur (4) présente un pied de raidisseur (22), qui est réalisé pour le contact avec la peau (2) ; et le pied de raidisseur (22) présente respectivement des évidements (26) ; les évidements (26) étant orientés chacun en direction de la peau (2) ; et les évidements étant configurés sous forme de zones de compensation d'allongement et de zones d'écrasement définies lors d'une déformation par un impact d'un objet sur la peau, la multiplicité de raidisseurs (4) étant disposée et réalisée sur la multiplicité de nervures (6) pour supporter la peau de telle sorte que les raidisseurs (4), dans le cas d'un impact d'un objet sur la peau (2), sont déformables plastiquement et absorbent alors la majeure partie de l'énergie appliquée par l'impact de l'objet.

2. Carénage suivant la revendication 1, dans lequel
- la peau réalise un arrondi autour de la structure de l'avion ;
- une forme de la multiplicité de nervures (6) est adaptée au moins à une section transversale de l'arrondi ; et
- les multiples raidisseurs (4) sont disposés de façon essentiellement parallèle sur la multiplicité de nervures (6).

3. Carénage suivant l'une des revendications 1 et 2, dans lequel
- une épaisseur et un matériau de la peau (2), un dimensionnement et un écartement de la multiplicité de raidisseurs (4) et un dimensionnement et un écartement de la multiplicité de nervures (6) sont conçus de telle sorte qu'une énergie d'impact d'un objet (10) d'une première étendue peut être déviée sur une première zone (14) de la peau (2), laquelle zone est plus grande que la première étendue de l'objet (10),
- la peau (2), la multiplicité de raidisseurs (4) ou la multiplicité de nervures (6) sont conçues de telle sorte que l'énergie d'impact, appliquée par l'impact, est convertible en déformabilité de la peau (2), de la multiplicité de raidisseurs (4) ou de la multiplicité de nervures (6),
- une zone limitrophe (16) d'une seconde étendue de la peau (2) est conçue de telle sorte que l'énergie d'impact, appliquée par l'impact sur la première zone (14) de la peau (2), peut être répartie pour la conversion d'énergie,
- la zone limitrophe (16) est plus grande que la première zone (14), concernée par l'impact, de la peau (2).

4. Carénage suivant l'une des revendications 1 à 3, dans lequel
- le carénage réalise une partie de bec de l'empennage vertical, de l'empennage horizontal ou de la voilure de l' avion ;
- la partie de bec présente un bord, qui s'étend essentiellement le long d'une direction ;
- la multiplicité de nervures (6) est disposée essentiellement en angle droit par rapport à cette direction, et
- la multiplicité de raidisseurs (4) est disposée de façon essentiellement parallèle à cette direction.

5. Carénage suivant l'une des revendications 1 à 4, dans lequel la multiplicité de raidisseurs (4) est liée à la peau (2).

6. Carénage suivant la revendication 5, dans lequel la peau (2) présente des épaississements (20) sur des zones de contact avec la multiplicité de raidisseurs (4).

7. Carénage suivant l'une des revendications 1 à 6, dans lequel les multiples raidisseurs (4) présentent chacun une section transversale en T, L, Z, U ou J.

8. Carénage suivant l'une des revendications 1 à 7, dans lequel la structure portante (4, 6) et la peau (2) sont conçues de telle sorte que, par suite d'un impact sur la peau (2) par un corps sphérique (10), une déformation de la peau (2) avec une section transversale à non symétrie de révolution peut être fournie par une coopération de la structure portante (4, 6) et de la peau (2).

9. Carénage suivant l'une des revendications 1 à 8, dans lequel la peau est en tôle.

10. Avion avec un carénage suivant l'une des revendications 1 à 9.
